# EUROPÄISCHE PATENTANMELDUNG

(11) **EP 0 849 345 A1**
(43) Veröffentlichungstag der Anmeldung: **24.06.1998**
(21) Anmeldenummer: 97810944.5
(22) Anmeldetag: 03.12.1997
(51) Int. Cl.: C09K 21/14, C08K 3/00, C08K 5/00

(54) **Intumeszierendes Material**

(30) Priorität: 20.12.1996 DE 19653503
(71) Anmelder: HILTI Aktiengesellschaft, 9494 Schaan (LI)
(72) Erfinder: Münzenberger, Herbert, 65191 Wiesbaden (DE); Mika, Horst Dieter, 86899 Landsberg (DE); Rump, Stefan, 86899 Landsberg (DE)
(74) Vertreter: Wildi, Roland

(57) **Zusammenfassung**

Formmasse oder Formkörper, insbesondere für Brandschutzzwecke, weisen eine Thermoplastmatrix auf, mit Matrixstabilisator und intumeszierenden Bestandteilen.

## Beschreibung

Die Erfindung betrifft Formmassen und Formkörper mit einer Matrix auf der Grundlage organischer Polymere und einem Gehalt an intumeszierenden Stoffen und weiteren Stoffen.

Es sind zahlreiche Formulierungen bekannt, welche in eine Matrix eingebettet intumeszierende Stoffe und weitere bekannte brandhemmende Stoffe wie Phosphate enthalten. Als Matrix dienen dabei häufig hochwertige Polymere, wie Polysilikone oder Epoxide, was einerseits die Wirtschaftlichkeit nachteilig beeinflusst und andererseits wegen der batch-weisen Herstellung auch herstellungstechnisch wenig günstig ist. Eine der Aufgaben der Erfindung besteht darin, Formmassen und Formkörper herzustellen, die einerseits von leicht verfügbaren, kostengünstigen Ausgangsstoffen Gebrauch machen und andererseits leicht herstellbar sind. Weitere Aufgaben sind aus den Vorteilen ersichtlich, die erfindungsgemäss erzielbar sind.

Gelöst wird diese Aufgabe bei Formmassen und Formkörper mit einer Matrix auf der Grundlage organischer Polymere und einem Gehalt an intumeszierenden Stoffen und weiteren Bestandteilen dadurch, dass als organische Polymere der Matrix bei Temperaturen von oberhalb mindestens etwa 90° C erweichende Thermoplasten sowie Stabilisatoren für die organischen Polymere der Matrix und intumeszierende Bestandteile mit einer Expansionstemperatur oberhalb der Erweichungstemperatur der Matrix bildenden Polymere enthalten sind.

Als leicht verfügbare und damit wirtschaftlich einsetzbare Thermoplasten sind insbesondere Polyethylene, vorzugsweise bei höheren Temperaturen erweichende kristalline Polyethylene, Polypropylene, bevorzugt, wie bei Polyethylenen hohen Molekulargewichts, Polyamide, Polyester oder Gemische von 2 oder mehr Thermoplasten verwendbar. Die Thermoplaste der Matrix können dabei auch in verschäumter Form vorliegen, so dass die Matrix eine poröse Struktur aufweist, mit vorzugsweise hohem Porenvolumen. Weiters kann die Matrix übliche Treibmittel wie z.B. flüssige Kohlenwasserstoffe zur Verschäumung der Matrix-Polymere bei Brandtemperaturen enthalten. Die auf der Grundlage von Thermoplasten gebildete Matrix kann weitere Bestandteile z.B. Füllmittel, insbesondere anorganischer Art wie Kaolin, Kreide, Kieselsäure, Gesteinsmehl und dergleichen, Pigmente, viskositätsbeeinflussende Stoffe und dergleichen übliche Zusätze enthalten.

Die erfindungsgemässen Formmassen und Formkörper enthalten weiters Matrixstabilisatoren, namentlich zur Stabilisierung der Thermoplaste. Die Stabilisierung kann dabei sowohl in mechanischem Sinne als auch im chemischen Sinne, dh im Sinne der Verzögerung oder Vermeidung einer Degradation erfolgen. So können als Matrixstabilisatoren, abgesehen von anorganischen Füllmitteln bei Brandtemperatur verkohlende und/oder verglasende bzw. keramisierende Stoffe enthalten sein. Zu verkohlenden und damit ein Kohlenstoffgerüst bildenden Stoffen gehören Kohlehydrate, namentlich Mono-, Di- oder Polysaccharide, wie Zucker, Stärke, Cellulose, Pentaerythrit, gegebenenfalls im Zusammenwirken mit Salzen starker anorganischer Säuren, wie der Phosphorsäure oder Schwefelsäure und/oder der entsprechenden Polysäuren. Typische verglasende bzw. keramisierende Stoffe, die bei Brandtemperatur möglichst an der erhitzten Oberfläche, dann aber im gesamten Volumen der Masse bzw. des Körpers diese Eigenschaft aufweisen, sind Alkalisilikate, Alkalialumosilikate, Alkalimagnesiasilikate, Phosphate, phosphathaltige Silikate bzw. Aluminate, organische oder anorganische Borverbindungen und Gemische von bei Brandtemperaturen verglasenden bzw. keramisierenden Stoffen.

Als Matrixstabilisatoren haben sich auch Stoffe als geeignet erwiesen, die bei Brandtemperaturen gegebenenfalls zusammen mit Antimonverbindungen wie Antimontrichlorid oder -oxid antikatalytisch brandhemmende und/oder unbrennbare Gase bilden, z.B. halogenhaltige Verbindungen wie Chlorkohlenwasserstoffe und/oder CO₂-abspaltende Verbindungen wie Carbonate, N₂-abspaltende Verbindungen wie Azodicarbonamid, organische Hyrazide, z.B. Arylsulfonsäurehydrazide, Hexamethylentetramin, Guanidin oder Melamin und deren Salze wie Melaminborat. Solche Gase können auch als Treibmittel zur Verschäumung der Matrix bei Brandtemperaturen dienen.

Als Stabilisatoren haben sich auch Substanzen bewährt, die bei Brandtemperaturen endotherm abreagieren, beispielsweise unter Bildung von Wasser wie z.B. Al(OH)₃.

Der Matrixstabilisierung kommt in vorliegendem Zusammenhang auch deswegen Bedeutung zu, weil unter Brandbedingungen die intumeszierenden Bestandteile fest eingebunden bleiben und unter Expansion über das ganze Volumen der Masse bzw. des Formkörpers ihre brandhemmende Wirkung ausüben können. Als intumeszierende Stoffe haben sich vor allem Blähgraphite, Perlite, wasserhaltige Alkalisilikate und/oder Vermikulite bewährt. Nach Möglichkeit soll die Bläh-, Treib- bzw. Expansionstemperatur oberhalb der Erweichungstemperatur der Matrix, dh z.B. 10 oder 20° C oder auch 40° C oder mehr höher als die Erweichungstemperatur der Matrix liegen. Blähgraphite sind wohlbekannte Substanzen, die durch chemische Behandlung von Graphit unter Einlagerung der Behandlungsmittel zwischen die Gitterschichten und durch Aufweitung der Gitterschichtenabstände gebildet werden.

In einer besonders bevorzugten Ausführungsform sind die erfindungsgemässen Formkörper durch Extrudieren, gegebenenfalls unter gleichzeitigem Verschäumen der Matrix-Polymere, insbesondere durch Strangpressen hergestellt bzw. sind die erfindungsgemässen Formmassen extrudierbar und hinsichtlich der Matrix-Polymere gegebenenfalls verschäumbar. In jedem Falle enthalten die erfindungsgemässen Formmassen und Formkörper intumeszierende Bestandteile deren Expansionstemperatur oberhalb der Extrudiertemperatur liegt, z.B. mindestens 5° C, vorzugsweise mehr als 10° C, insbesondere mehr als 30° C höher als die Extrudiertemperatur. Die Extrudiertemperatur liegt regelmässig merklich höher als die Erweichungstemperatur der Masse. In gleicher Weise und gleichen Bedingungen ist auch eine nach üblichen Spritzgussverfahren erfolgende Spritzgussverarbeitung möglich.

Die Matrixstabilisatoren sind meist in einer Menge von 3 - 30, vorzugsweise 10 - 35 Gew.-%, die intumeszierenden Bestandteile in einer Menge von 2 - 50, insbesondere 5 - 40 Gew.-%, jeweils bezogen auf die Gesamtmasse bzw. den gesamten Formkörper enthalten.

Die erfindungsgemässen Massen werden bevorzugt als Brandschutzmassen verwendet, zum Schliessen von Oeffnungen, Fugen, insbesondere zum Schliessen von Leitungen, Kabel- und Rohrdurchbrüchen und als Rohrmanschetten. Die Verschäumung der Matrix-polymere und/oder Expansion der intumeszierenden Bestandteile, jeweils bei Brandtemperaturen, dient dabei dazu als Rohrabschottung bei brennbaren oder nicht-brennbaren Rohren den Rohrquerschnitt zu verschliessen.

## Patentansprüche

1. Formmasse und Formkörper mit einer Matrix auf der Grundlage eines organischen Polymeren und Gehalten an Bestandteilen wie einem intumeszierenden Stoff, **dadurch gekennzeichnet**, dass als organisches Polymer der Matrix ein bei Temperaturen von oberhalb 90° C erweichender, gegebenenfalls verschäumter Thermoplast, ein Matrixstabilisator und ein intumeszierendes Bestandteil mit einer Expansionstemperatur oberhalb der Erweichungstemperatur der Matrix enthalten sind.

2. Formmasse und Formkörper gemäss Patentanspruch 1, dadurch gekennzeichnet, dass als Thermoplast Polyethylen, Polypropylen, Polyamid und/oder Polyester enthalten sind.

3. Formmasse und Formkörper gemäss Patentanspruch 1 oder Patentanspruch 2, dadurch gekennzeichnet, das als Matrixstabilisator bei Brandtemperaturen verkohlende und/oder verglasende bzw. keramisierende Stoffe enthalten sind.

4. Formmassen und Formkörper gemäss einem der vorhergehenden Patentansprüche, dadurch gekennzeichnet, dass als Matrixstabilisator Stoffe enthalten sind, die bei Brandtemperatur antikatalytisch brandhemmende und/oder unbrennbare Gase abgeben.

5. Formmasse und Formkörper gemäss einem der vorhergehenden Patentansprüche, dadurch gekennzeichnet, dass als Matrixstabilisator ein bei Brandtemperatur endotherm abreagierender Stoff enthalten ist.

6. Formmasse und Formkörper gemäss einem der vorhergehenden Patentansprüche, dadurch gekennzeichnet, dass als intumeszierender Bestandteil Blähgraphit, Perlit, wasserhaltige Alkalisilikate und/oder Vermikulit enthalten ist.

7. Formmasse gemäss einem der vorhergehenden Patentansprüche, dadurch gekennzeichnet, dass sie extrudierbar, insbesondere strangverpressbar oder durch Spritzgussverfahren verarbeitbar ist.

8. Formkörper gemäss einem der vorhergehenden Patentansprüche, dadurch gekennzeichnet, dass er durch Extrusion, insbesondere durch Strangpressen oder durch Spritzgussverarbeitung hergestellt ist.

9. Formmasse und Formkörper gemäss Patentanspruch 7 oder 8, dadurch gekennzeichnet, dass die Expansionstemperatur des intumeszierenden Stoffes mindestens 5°C oberhalb der Extrusionstemperatur liegt.

10. Verwendung der Formmassen und Formkörper gemäss einem der vorhergehenden Patentansprüche als Brandschutzmittel, insbesondere in Kabel- und Rohrdurchbrüchen und -kanälen und/oder als im Brandfalle durch Expansion rohrabschottende Rohrmanschette.
